# EUROPEAN PATENT APPLICATION

(11) **EP 1 411 723 A1**
(43) Date of publication of application: **21.04.2004**
(21) Application number: 02743859.7
(22) Date of filing: 08.07.2002
(51) Int. Cl.: H04N 7/08, H04H 1/00, H04N 7/173, H04H 1/02, H04N 5/44, G06F 13/00

(54) **PROGRAM; RELATED INFORMATION FETCH SYSTEM AND METHOD**

(30) Priority: 25.07.2001 JP 2001224219
(71) Applicant: MATSUSHITA ELECTRIC INDUSTRIAL CO., LTD., Kadoma-shi, Osaka 571-8501 (JP)
(72) Inventor: NAKAOKA, Hideaki, Toyonaka-shi, Osaka 560-0085 (JP); KUSUMI, Yuki, Kashiba-shi, Nara 639-0254 (JP); SHIMOJI, Tatsuya, Neyagawa-shi, Osaka 572-0019 (JP)
(74) Representative: Beresford, Keith Denis Lewis
(86) International application number: PCT/JP2002/006921
(87) International publication number: WO 2003/010962

(57) **Abstract**

It is possible for the present invention to obtain program-related information browser languages used in the terminals vary by carrier. A broadcast station 2 broadcasts AV stream data and its characteristic data. Basic data for determining URI is written in the characteristic data. Carrier ID is stored in each of terminal 4a through 4n. A contents-server from which program-related information being acquired is determined from the carrier ID and the basic data. Upon determining the contents-sever, program-related information is obtained therefrom by connecting one of predetermined relay centers 4a through 4n provided at the carrier via the Internet.

## Description

### CROSS REFERENCE TO RELATED APPLICATIONS

All the contents disclosed in Japanese Patent Application No. 2001-224219 (filed on July 25, 2001), including specification, claims, drawings and abstract and summary is incorporated herein by reference in its entirety.

### BACKGROUND OF THE INVENTION

### Field of the invention

The present invention relates to a terminal capable of acquiring information via digital broadcasting and communications.

### Background art

Services, using general type digital-based broadcasting not using satellites (hereinafter referred to as terrestrial digital broadcasting) are scheduled in addition to digital broadcasting via satellites. Realization of receipt of terrestrial digital broadcasting data with portable terminals is expected since miniaturization of receiving antennas that is differ from digital broadcasting via satellites can be done.

In a brief description the art, a user of a portable terminal receives a TV program with the terminal. Within the TV program, information on related to such program is broadcast as data. Another information related to the program can be obtained through a direct access by broadcasting URI (Uniform Resource Identifiers) of contents-servers (information distributing servers) storing detailed information on the program via the Internet as link information.

In this case, browser-program equipped mobile phones can be the portable terminals. Collecting information can be implemented by further equipping a tuner for receiving terrestrial digital broadcasting on the mobile phones.

The following problem may occur when an URI is send by terrestrial digital broadcasting described above. Languages used for browsers installed in the mobile phones (hereinafter referred to as browser-languages) are not only one. It is, therefore, necessary to access contents-data with a specific language employed by a browser while the contents-data (data to be distributed) is stored in different languages with respect to each of URIs even when the contents-data (data to be distributed) itself is the same.

In order to solve the problem, the following solution may be considered. A carrier's ID for identifying carriers is stored in the terminal. Scripts for processing programs that are broadcast in accordance with Carousel transmission system are received at the terminal. The terminal determines an URI for a contents-server to be connected by reading out its carrier's ID according to processing of the scripts.

However, it is necessary to equip a dedicated capability for receiving DDB message data in Carousel transmission system and DII message data only for the above solution. In addition, the processing program for implementing such capability needs a certain amount of memory.

It is an object of the present invention to solve the above-described problems and to provide a method for accessing to the resource of a contents-server on the Internet using broadcast data even different browser language being used at a receiving terminal, and a system therefor.

Further object of the present invention is to provide a method for obtaining program-related information capable of transmitting data corresponding to a terminal's identifier without having the capability of receiving data broadcasting.

### Disclosure of the Invention

In one aspect of the present invention, the method for obtaining program-related information comprises: broadcasting program data containing video and audio data as a transport stream, and broadcasting basic data for determining a URI being used for obtaining program-related information so that the basic data is mixed into characteristic data of the transport stream data; and at each receiving terminal, determining a URI by reading out data for identifying terminal's attribution stored in the terminal, and obtaining the program-related information from a contents-server specified by the determined URI.

In another aspect of the present invention, the stream data receiving device comprises: A) receiving means for receiving 1) program data containing video and audio data being broadcast as a transport stream and 2) characteristic data of the transport stream data; B) notification data generating means for generating notification data containing video and/or audio data in accordance with the characteristic data and the transport stream being received; C) notification means for notifying the generated notification data; D) storage means for storing data for identifying terminal's attribution; E) URI determining means for determining a URI for acquiring program-related information in accordance with basic data for determining a URI by reading out the basic data in control information and the data for identifying terminal's attribution upon providing an acquisition command is provided from an operator; and F) program-related information obtaining means for obtaining program-related information from a contents-server specified by the determined URI and providing the obtained information to the notification data generating means.

In another aspect of the present invention, the method for obtaining program-related information comprises: receiving characteristic data of a transport stream in which basic data for determining a URI being used for obtaining program-related information is mixed in addition to program data containing video and/or audio data being broadcast as the transport stream; determining a URI by reading out data for identifying terminal's attribution stored in the terminal and by using the read out data; and obtaining the program-related information from a contents-server specified by the determined URI.

In another aspect of the present invention, the broadcasting apparatus for program-related information comprises: A) a first storage means for storing program data; B) a second storage means for storing basic data for determining a URI by which each terminal acquires program-related information via the Internet; and C) broadcasting means for broadcasting program data containing video and/or audio data as a transport stream; and D) wherein the broadcasting means broadcasts the basic data for determining a URI so as to mixed the basic data into characteristic data of the transport stream data.

In another aspect of the present invention, the broadcasting apparatus for program-related information comprises: broadcasting apparatus for program-related information according to the present invention comprises: broadcasting program data containing video and/or audio data as a transport stream; and broadcasting basic data for determining a URI so as to mixed the basic data into characteristic data of the transport stream data.

In another aspect of the present invention, the method for obtaining program-related information comprises: broadcasting program data containing video and/or audio data as a transport stream; at each terminal, sending a program specifying identifier and data for identifying terminal's attribution stored in the terminal to a URI determining server; receiving a URI for acquiring program-related information; and obtaining the program-related information from a contents-server specified from the received URI, program-related information corresponding to the as long as each terminal has a capability of receiving characteristic data for identifying terminal's attribution in the terminal.

In another aspect of the present invention, the data regenerating apparatus comprises: a) receiving means for receiving data being broadcast; b) a first regenerating means for regenerating the received broadcast data; c) storage means for storing data for identifying terminal's attribution; d) URI determining means for determining a URI of data to be downloaded in accordance with basic data for determining URI by reading out the basic data for determining URI and data for identifying terminal's attribution stored in the storage means upon receipt of a command from a user; and e) a second regenerating means for regenerating data being downloaded from the determined URI.

Other objects and features of the present invention will be more apparent to those skilled in the art on consideration of embodiments and the accompanying drawings.

### BRIEF DESCRITION OF THE DRAWINGS

Fig. 1 is an overall view of the present invention;

Figs. 2 is a functional block diagram of a transmitter;

Fig. 3 is a functional block diagram of a terminal;

Fig. 4 is a view showing appearance of the terminal;

Fig. 5 is a block diagram showing hardware structure of the terminal;

Fig. 6 is a flow chart for implementing process for obtaining a URI and process for display at the terminal;

Fig. 7 is a table showing relationship between URIs and corresponding carriers' IDs;

Fig. 8 is a view showing basic data for determining a URI in another format;

Fig. 9 is a view illustrating a TV set;

Fig. 10 is a diagram showing a structure in which a broadcasts-receivable board is connected to a PC.

### DETAILED DESCRIPTION OF THE PREFERRED EMBODIMENTS

### 1. First embodiment

### (1) Overall structure

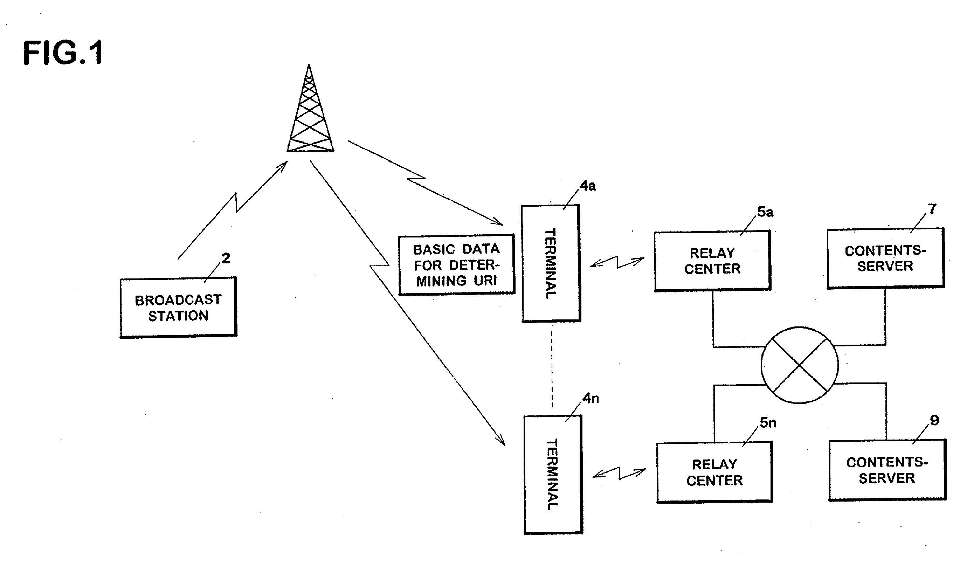

Fig. 1 shows an overall structure of a s system for obtaining program-relating information according to an embodiment of the present invention. A broadcasting station 2 broadcasts program data containing video and/ or audio data as transport streams. Similarly, characteristic data for the transport streams is broadcast as well. In such characteristic data, data for determining URI described later is written therein. Each of terminals 4a through 4n selectively receives the stream data and its characteristic data. In each of the terminals 4a through 4n, carrier's identifier is respectively stored. Such terminals 4a through 4n determines a contents-server from which program-relating information is acquired in accordance with the carrier's identifier and basic data for determining a URI contained in characteristic data. The terminals 4a through 4n are respectively connected to predetermined relay centers 4a through 4n provided at the carrier for obtaining program-relating information from designated contents-server via the Internet.

Hence, appropriate program-relating information can be obtained by writing basic data for determining a URI in characteristic data of the stream data and by determining a contents-server from which such program-relating information is read out using carriers' identifiers stored in each of the terminals even when a browser language used in a temrinal is differ from that of the contents-server.

### (2) Hardware structure of an information distributing device

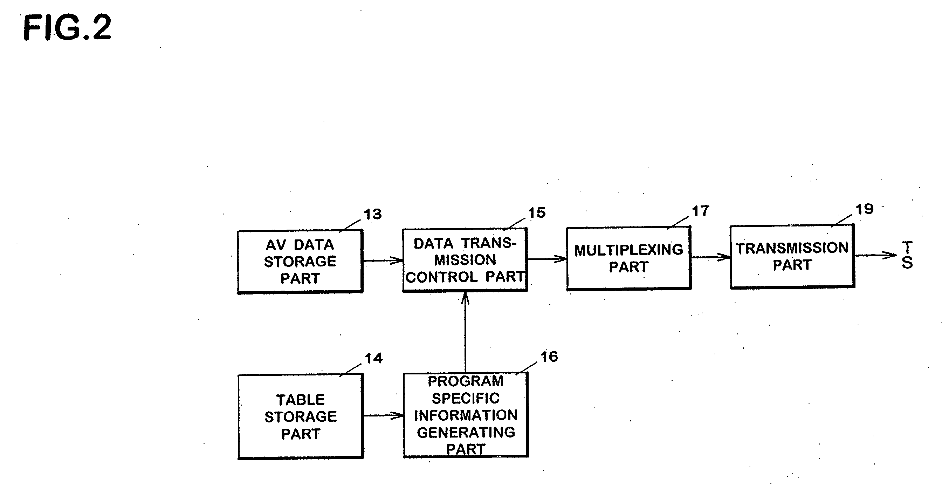

Fig. 2 illustrates a block diagram a transmitter 10. Video and/or audio data is stored as stream data within an AV data storage part 13.

Table data for determining URI is stored in a table storage part 14. A program specification information generating part 16 generates sectioned data of program specific information (PSI) arranging table data stored in the table storage part 14. A data transmission control part 15 acquires stream data stored in the AV data storage part 13 and sectioned data of the program specific information, and provides them to a multiplexing part 17. The multiplexing part 17 multiplexes each stream data and sectioned data of the program specific information, and provides them to a transmission part 19 as a stream. The transmission part 19 transmits the steam data.

### (3) Functional diagram of terminal

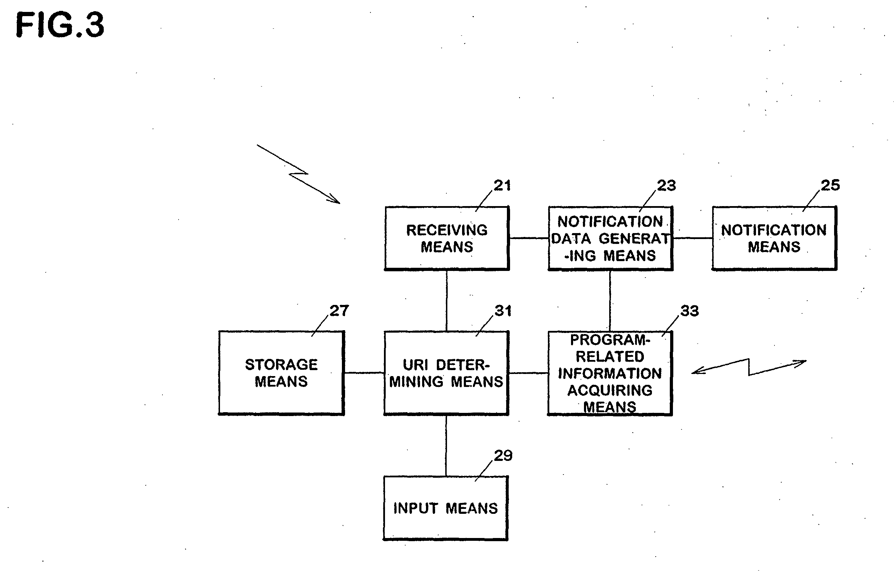

Fig. 3 shows a functional block diagram of a terminal 4a, which serves as a stream data receiver. The terminal 4a includes storage means 27, receiving means 21, notification data generating means 23, notification means 25, URI determining means 31, program-related information acquiring means 33, and input means 29.

The receiving means 21 receives 1) program data containing video and/or audio data, which are broadcast as transport streams and 2) characteristic data of the transport streams. The notification data generating means 23 generates notification data in accordance with the characteristic data and the transport streams. The notification means 25 notifies the notification data thus generated. The storage means 27 stores carriers' identifiers. Through the input means 29, an acquisition command for acquiring program-related information via the Internet is input. Upon receipt of an acquisition command from the input means 29, the URI determining means 31 determines a URI for acquiring program-related information in accordance with basic data for determining a URI by reading out the basic data and the carrier's identifier in the characteristic data. The program-related information acquiring means 33 acquires the program-related information from a contents-server designated by the determined URI and provide the information to the notification data generating means 23. In this way, program-related information depending on programs (vary actively) can be notified even when the browser language used in the terminal is differ from that of the contents-server.

### (4) Hardware structure of terminal

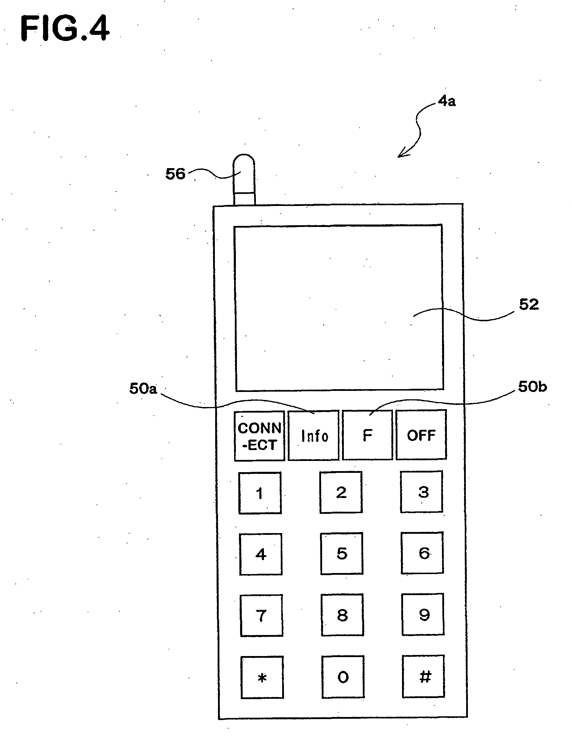

Fig. 4 shows a plan view illustrating appearance of the terminal 4a. The terminal 4a is a mobile phone having a browser software for the Internet capable phone to which additional function of stream data reception for receiving video signals of terrestrial digital broadcasting and audio stream data is added. Selection of broadcasting services, switch to a phone, and other functional switch can be carried out by depressing menu buttons displayed on a display 52 upon depression of a function button 506 shown in Fig. 4. An information acquisition button 50a is a button for a user to make a command if the user wants to obtain program-related information during the receipt of the program. Detailed processing performed upon depressing the information acquisition button 50a will be described later.

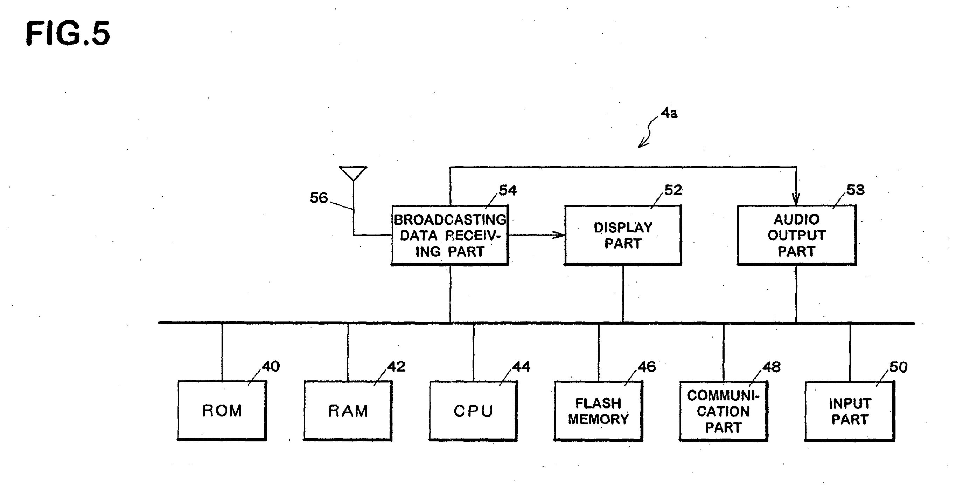

Fig.5 shows hardware structure of the terminal 4a. The terminal 4a includes a broadcasting data receiving part 54, a display part 52, an audio output part 53, ROM 40, RAM 42, CPU 44, a flash memory 46, a communication part 48 and an input part 50 consist of variety of buttons shown in Fig. 4

The broadcasting data receiving part 54 includes a tuner, transport stream decoder (TS decoder) and AV decoder and so on similar to a regular-type terrestrial digital-broadcasting receiver. The display part 52 is of LCD, for example. The communications part 48 communicates data between the relay centers. The display part 52 and the audio output part 53 respectively displays and outputs AV data upon receipt of such data received at the broadcasting data receiving part 54.

Within the flash memory 46, variety of computer-programs described later and carriers' IDs are stored.

### (5) Process for obtaining program-related information

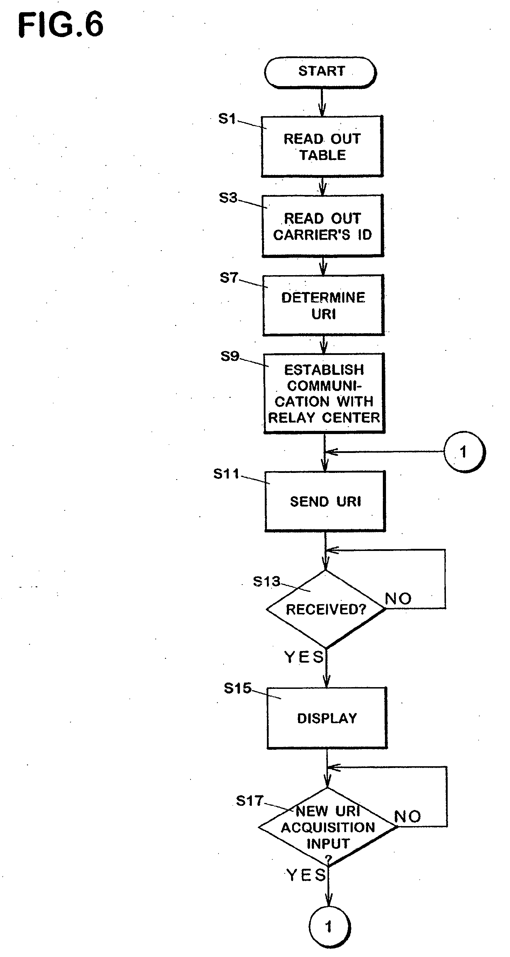

Series of steps for obtaining program-related information will be described below using Fig. 6. Assuming that the information acquisition button 50a shown in Fig. 4 is pressed during the receipt of a program via terrestrial digital broadcasting at the terminal 4a that is provided by a carrier A company.

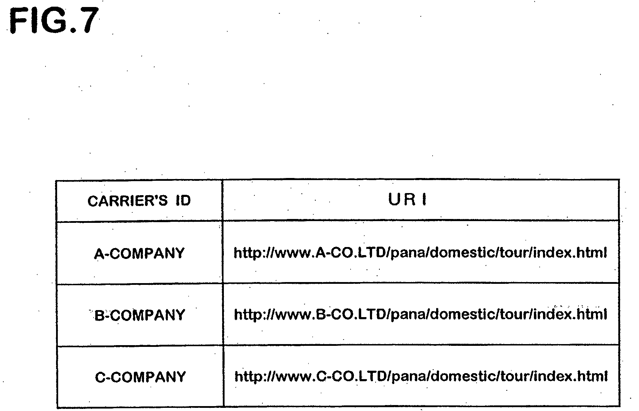

Then the broadcasting station 2 writes carrier-oriented URI tables shown in Fig. 7 in characteristic data PMT (program map table) and transmit it. For example, it can be stored either in a first descriptor area or a second descriptor area of the PMT. Since the second descriptor area is able to store data for each elementary stream (ES), the storing destination in either of the descriptor area may be determined between the station and the terminal.

The user of terminal 4n inputs from the input part 50 (see Fig. 5) a channel selection command for receiving a desired service. Upon input of such command, the CPU 44 sets conditions implied on the selection to the broadcasting data receiving part 54. Received video data stream is displayed on the display part 52 and received audio data stream is output from the audio output part 53. If the user desires acquisition of program-related information of the program on watching the displayed images, depress the acquisition button 50a. For example, if a commercial message from XX consumer-electronics manufacturing Co. such as " Right now, XX Co. is in Summer clearance sale! Press the acquisition button for detail" and so on is displayed, the user who desires to see the details depress the button 50a.

Detailed process of such case will be described using Fig. 6. The CPU 44 reads out carrier-oriented URI tables from the characteristic data PMT (program map table) (Fig, 6 step S1). In this instance, a carrier-oriented URI table shown in Fig. 7 is read out. The CPU 44 then reads out a carrier's ID that serves as a carrier's identification stored in a flash memory 46 (step S3). In this instance, a carrier's ID of "A-company" is read out.

The CPU 44 then determines a URI that has a carrier's ID match with the stored carrier's ID (step S7). A URI "http://www.A-CO.LTD/pana/domestic/tour/index.html " is determined since the carrier's ID "A-company " is read out and the stored ID matches with each other. Then the CPU 44 establishes communications between the terminal and a predetermined relay center via the communications part 48 (Fig. 6 step S9).

The CPU 44 makes a download-request for a file (s) specified by the determined URI via the relay center (step S11). In this case, it is assumed that the file specified by the URI "http://www.A-CO.LTD/pana/domestic/tour/index.html" is written in a browser-language, which is used by a carrier A-company such as C-HTML language, for example.

The CPU 44 then judges whether or not to receive a file(s) written in C-HTML language specified by such URI (step S13). Upon receipt of the file(s) the CPU 44 interprets the received file(s), generates display data and provides the data to the display 52 shown in Fig. 5. In this way, the file specified by the URI "http://www.A-CO.LTD/pana/domestic/tour/index.html" is displayed on the display 52. For example, a message " Right now, a rice cooker manufactured by X-company is on sale! We offer ¥29800 today ONLY!" is displayed together with an image of a rice cooker XXX on the display 52.

Then, the CPU 44 judges whether or not a new URI acquisition command is input (step S17), upon inputting such command, the process repeats all over the steps after step S11.

In the case of depressing the information acquisition button 50a shown in Fig. 4 on a terminal 4b of carrier B-company, during the time in which a program being broadcast on terrestrial digital broadcasting is watched, a carrier's ID "B-company" is read out at step S3 in Fig. 6.

A URI "http://www.B-CO.LTD/pana/domestic/tour/index.html" is determined since the carrier's ID "B-company "being read out and the stored ID matches each other. Then the CPU 44 establishes communications between the terminal and a predetermined relay center via the communications part 48 (Fig. 6 step S9).

The CPU in the terminal 4b makes a download-request for a file (s) specified by the determined URI via the relay center (step S11). In this case, a file specified by the URI ""http://www.. B-CO.LTD/pana/domestic/tour/index.html" is designated as a file to be downloaded. Here, it is assumed that the file specified by the URI "http://www.B-CO.LTD/pana/domestic/tour/index.html" is written in a browser-language, which is used by a carrier B-company such as HDML language.

Upon receipt of a file written in HDML language specified by such URI, the CPU 44 interprets the received file, generates display data and provides the data to the display 52 shown in Fig. 5. In this way, the file specified by the URI "http://www.B-CO.LTD/pana/domestic/tour/index.html" is displayed on the display 52. In this instance, the file is stored with a different URL in a different language on a carrier-oriented basis, but actual data itself is the same with other data. Consequently, exactly the same images displayed on the terminal 4a are displayed on the terminal 4b.

Hence, files are subjected to download by determining a URI of contents-data written in several different browser languages. Basic data for determining a URI is transmitted so as to mix with characteristic data of stream data. Consequently, the basic data for determining a URI can be received even when no room for receiving data broadcasting of terrestrial digital broadcasting exists. The computer-program for determining a URI described in Fig. 6 is previously stored within each terminal. In this way, each terminal may omit receive functions for receiving data broadcasting of terrestrial digital broadcasting differ from transmitting such computer-program in a script format.

In this embodiment, a destination of access can be switched at terminal by using identifiers stored in each terminal. This capability offers the following advantages. The system achieves full-two-way communications on the Internet such that a direct reply from a server for a transmitted request sent by a terminal can be received. Broadcasting, on the other hand, realizes pseudo-two-way communications. In such pseudo-two-way communications, desired data can be received at each terminal corresponding to its browser type even when own browser type can not transmit to a server as a request.

It might be considered that a file(s) to be distributed is switched by judging the type of a browser from the header information when a request from a terminal for downloading contents is being made. However, there might be a case in which too many requests for distributing contents-data from many viewers who watch the same program are provided almost simultaneously to a distribution server in the case of broadcasting. In such instance, a response time during which a terminal sends a request for downloading contents-data and the contents-data is received by the terminal slows. Correspondingly, such time period can be shorten since contents-data file(s) received at a terminal is determined at the terminal side in the embodiment described above.

### (6) Embodiment in which URI is generated

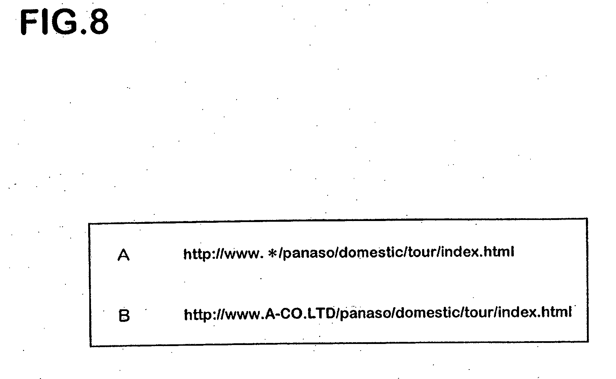

In the above described embodiments, a table consist of carrier-oriented URIs is transmitted to PMT and one of URIs is selected at the terminal side. Alternatively, a URI may be obtained by writing a common part of the URIs into PMT and by transmitting the resulting PMT to terminals so that each terminal substitutes a different part of the URIs for each carrier. For example, an incomplete URI shown in Fig. 8A is written in PMT once, then if a receiving terminal is provided by a carrier A-company, "A-CO.LTD" as an ID of A-company is substituted in a part with * mark in Fig. 8A, and a URI http://wwww. A-CO.LTD/panaso/domestic/travel/index.html may be generated. The processes subsequently implemented are the same as that of the first embodiment. The advantage of this embodiment is that the amount of data is less than the case transmitting tables.

### (7) Other embodiment

Alternatively, the present invention is applicable to the instance in which transport streams are stored in video equipment once then the streams are playback later as well.

A receiving part for receiving digital TV broadcast is provided to browser-program equipped mobile phones in the above embodiments, a receiving part for receiving digital radio broadcasting may be provided to browser-program equipped mobile phones. In such instance, program-related information can be notified on a display using the browser originally equipped.

In the above embodiments, the information acquisition button 50a is provided as a dedicated button, such button may be substitutes for a button displayed on a display which is created by a computer-program for processing receiving processes of terrestrial digital broadcasting.

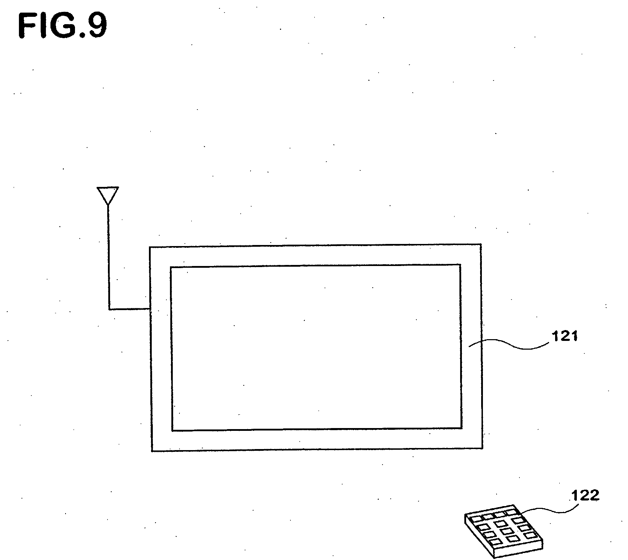

Mobile phones are used as program-related broadcasting devices in the above embodiments, such devices can be a TV set 121 as shown in Fig. 9. In this instance, a remote controller 122 may perform channel selection and switching to the Internet, for example.

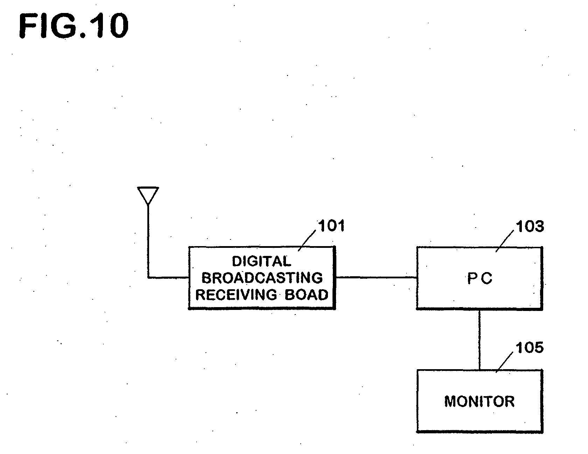

Program-related information may be displayed and subjected to other processing using a browser program installed in a PC while a dedicated board (including a card) 101 having receiving function of terrestrial digital broadcasting is connected to a general-purpose PC 103, and the digital broadcasting is displayed on a monitor 105 of the PC as shown in Fig. 10. In this instance, a URI of a contents-server from which contents is acquired may be specified from data for determining URI within characteristic data by storing a browser language identifier(s) in the PC.

In the above embodiments, the portable terminals equip capabilities of both receiving function of terrestrial digital broadcasting and Internet communication function, and information related to both are displayed on displays of portable terminals. The display alone can be carried out with equipment having a larger a display area such as a notebook PC. The hardware structure of such instance is almost the same as that of the embodiment described above except in that AV stream data received by the broadcast data receiving part is output to an AV input terminal (not shown) of a notebook PC and in that the exchange of data with the notebook PC is implemented via USBIF56.

Alternatively, the capabilities of communication via the Internet can be realized by providing receive processing function of terrestrial digital broadcasting to the portable terminals.

Alternatively still, in the above embodiments, the portable terminals receiving terrestrial digital broadcasting have been described. The present invention is applicable to portable terminals receiving satellite broadcasting. Alternatively, identifiers assigned to each of browser languages may be directly stored in the mobile phone, instead of carriers' IDs, for example.

In the above embodiments, PMT is used as characteristic data storing basic data for determining a URI, non-PMT data can be used as long as it is PSI (program specific information). Instead of PSI, such data may be stored into SI (service information) such as EIT (event information table).

Alternatively still, such data may also be stored into stream descriptors in the event message transmission method, such as NPT (normal play time) reference descriptors, or general event descriptors. In the event of storing such data into the general event descriptors, it may be stored into private data bytes, for example. The stream descriptors are sent by 0X3D, which has different table IDs from DII message and DDB message. Consequently, such stream descriptors can be received even if no receiving function of DII message and DDB message is equipped. In addition, a program can be switched to another one by describing the data into stream descriptors.

In this embodiment, process for determining URI is started by a command from a user. In this way, shifting the process into the determination process as a result of providing a command by the user allows the system to shift into a shopping site during a commercial message (CM) when a button 50a is pressed.

Further, in the above embodiments, a timing during which the button 50a shown in Fig. 4 can be pressed is displayed, another way to notify the timing can be used. For example, the button 50a may be blinking. In this way, the button notifies the user that the process is ready to switch.

Still further, information on presence of contents-data for each carrier is used as a basic data for determining a URI, and a URI corresponding to the basic data may be obtained from a URI acquisition server designated by providing an event ID of a program being on-aired if the contents-data exists. In this instance, such information on presence of contents-data may be information on existence of contents-data for each browser language.

In the above embodiments, the process for determining a URI is started when a command for acquiring program-related information is provided from a user, the timing of providing such command is not limited.

Each of files are grouped for each carrier in the above embodiments, directory structure of each file can be any structure. In other words, each file can be arranged on a contents-data basis and then may be classified into each carrier basis. Each file can be classified into "http://www.pana/domestic/travel/A-CO.LTD/index.html","http://www.pana/domestic/travel/B-CO.LTD/index.html" and "http://www.pana/domestic/travel/C-CO.LTD/index.html".

There is a possibility that access to the central computer at a certain time period flocks thereto because broadcast is performed on a one-to-multiple basis. In order to solve such a problem, more detailed information such as regional IDs and group IDs are stored in every terminal, and the URI may be segmented in detail. For example, it is considered that a URI for A-company can be classified into the following URIs on a regional basis such as http://www.pana/domestic/travel/A-CO.LTD/osaka/index/.html" and "http://www.pana/domestic/travel/A-CO.LTD/shikoku/index.html". Further, the URI for A-company can be classified into detailed URIs using detailed information such as telephone numbers. Such phone numbers are tail ends thereof and the like.

Either of corresponding tables, one consist of a group of information that represent presence of browser language identifiers and program-related information, or the other consist of a group of information that represent presence of carriers' identifiers and program-related information, are mixed into the transport stream and being broadcast to the terminals. At each terminal, transmittance to the URI determination server may be determined in accordance with either of the corresponding tables. Hence, communication with the URI determination server can be initiated only when program-related information exists.

In the above embodiments, the present invention is applied to the instance in which browser language is varied by each terminal, similarly, the present invention can be applicable to the instance in which data format of regeneratable data such as music data and video data at each terminal is varied by each terminal.

In the embodiments described above, CPU is used together with computer software to realize the functions shown in Fig. 2 and Fig. 3. However, a part of the functions or all of which may be realized by hardware such as a logic circuit(s).

A part of processing performed by a computer-program may be implemented by the operating system (OS).
1) The method for obtaining program-related information according to the present invention comprises the steps of: broadcasting program data containing video and audio data as a transport stream, and broadcasting basic data for determining a URI used for acquiring program-related information so that the basic data is mixed into characteristic data of the transport stream data; at each receiving terminal, determining the URI by reading out data for identifying terminal's attribution stored in the terminal, and obtaining the program-related information from a contents-server specified by the determined URI. In this way, program-related information corresponding to the data for identifying terminal's attribution of the terminal can be obtained as long as each terminal has a capability of receiving characteristic data. Consequently, no excessive functions are necessary to each terminal, so that each terminal can be smaller and lighter. Further, since URI is determined at each terminal, a lower load is imposed on the contents-server than the case of determining a URI for obtaining program-related information within communications between terminal and the contents-server.
2) In the method for obtaining program-related information according to the present invention, the data for identifying terminal's attribution is a carrier's identifier stored in the terminal. In this way, program-related information corresponding to each terminal can be obtained even when browser languages used in the terminals vary by carrier.
3) In the method for obtaining program-related information according to the present invention, the data for identifying terminal's attribution is a browser language used in the terminal. In this way, program-related information corresponding to each terminal can be obtained even when browser languages used in terminals vary by each terminal.
4) In the method for obtaining program-related information according to the present invention, the basic data for determining a URI is written within SI (service information) of the transport stream. In this way, the basic data for determining a URI can be obtained by just acquiring service information. Further, the basic data for determining a URI can be described for each program, service or network by writing a URI in service information.
5) In the method for obtaining program-related information according to the present invention, basic data for determining a URI is written in an EIT (event information table) of the service information. In this way, the basic data for determining a URI can be obtained by just acquiring EIT. Further, the basic data can be written so as to completely responsive to a program by storing a URI in an EIT.
6) In the method for obtaining program-related information according to the present invention, the basic data for determining a URI can be described by determining a URI is written in PSI (program specific information). In this way, the basic data for determining a URI can be acquired even with a simple receiving system incapable of receiving service information.
7) In the method for obtaining program-related information according to the present invention, the basic data for determining a URI is written in PMT (program map table). In this way, the basic data for determining a URI can be acquired by just obtaining PMT even with a simple receiving system incapable of receiving service information.
8) In the method for obtaining program-related information according to the present invention, the basic data for determining a URI is written within a stream descriptor in an event message transmission method of the stream. In this way, the basic data for determining a URI can be transmitted at a predetermined time. Consequently, the destination from which program-related information is acquired can be switched any time during a program (event).
9) In the method for obtaining program-related information according to the present invention, the basic data for determining a URI is a corresponding table comprised of a group of combined data of URIs and data for identifying terminal's attribution, and wherein a URI is determined by specifying combined data that conform with the identification data stored in the terminal. In this way, selecting the corresponding table can specify a URI.
10) In the method for obtaining program-related information according to the present invention, the data for identifying terminal's attribution is a carrier's identifier, the basic data for determining a URI is remaining data after removing a part corresponding to the carrier's identifier out of URI data, and wherein the URI is determined by adding a carrier's identifier stored in the terminal. In this way, selecting the corresponding table can specify a URI.
11) In the method for obtaining program-related information according to the present invention, the data for identifying terminal's attribution is a browser language identifier used in the terminal, the basic data for determining a URI is remaining data after removing a part corresponding to a browser language identifier out of URI data, and wherein the URI is determined by adding a browser language identifier stored in the terminal. In this way, the amount of data sent into characteristic data may be less than the case sending combined data of a URI and a browser language identifier.
12) In the method for obtaining program-related information according to the present invention, the basic data for determining a URI is a corresponding table comprising a group of combined data of a flag that represents capability of acquiring program-related information from a contents-server and data for identifying terminal's attribution, each terminal specifies combined data complying with data for identifying terminal's attribution stored in the terminal, then a series of steps comprising; transmitting a program identifier of a program to be received to a predetermined URI server; receiving a URI of the contents-server from which program-related information is acquired; and acquiring the program-related information from the contents server specified by the URI, is carried out when the flag representing program-related information from a contents-server can be acquired. In this way, access to the URI determination server is performed when the program-related information can be acquired, so that unnecessary access to the URI server can be prevented.
13) In the method for obtaining program-related information according to the present invention, the receiving terminal initiates process for determining a URI by a command from a user. In this way, the program-related information can be obtain upon receipt of the command from the user.
14) In the method for obtaining program-related information according to the present invention, the receiving terminal initiates process for determining a URI upon receipt of the command from user during received broadcast data is regenerated. In this way, the program-related information can be obtained from a contents-server specified by the determined URI at a timing desired by the user during on-air.
15) In the method for obtaining program-related information according to the present invention, the receiving terminal updates the basic data for determining a URI whenever new basic data for determining a URI is received and initiates process for determining a URI upon receipt of a command from a user. In this way, program-related information can be acquired immediately after receipt of the command from the user.
16) In the method for obtaining program-related information according to the present invention, whenever new basic data for determining a URI is received, the receiving terminal reads out data conform to data for identifying terminal's attribution stored in the terminal out of the new basic data. Hence, storing necessary data for the terminal can reduce memory capacity.
17) In the stream data receiving device according to the present invention comprises: A) receiving means for receiving 1) program data containing video and audio data being broadcast as a transport stream and 2) characteristic data of the transport stream data; B) notification data generating means for generating notification data containing video and/or audio data in accordance with the characteristic data and the transport stream being received; C) notification means for notifying the generated notification data; D) storage means for storing data for identifying terminal's attribution; E) URI determining means for determining a URI for acquiring program-related information in accordance with basic data for determining a URI by reading out the basic data in control information and the data for identifying terminal's attribution upon providing an acquisition command from an operator; and F) program-related information acquiring means for acquiring program-related information from a contents-server specified by the determined URI and providing the obtained information to the notification data generating means. In this way, no excessive functions are necessary to each terminal, so that each terminal can be smaller and lighter. Also, corresponding program-related information can be acquired even when browser language vary by carrier, by uploading the information in a language capable of being interpreted by the terminal. Further, since URI is determined at each terminal, a lower load is imposed on the contents-server than the case of determining a URI for obtaining program-related information within communications between the terminal and the contents-server.
18) In the stream data receiving device according to the present invention, wherein the receiving device is a mobile phone with browsing function, and wherein the program-related information obtaining means accesses to the contents-server via a server located at a communication center. In this way, the receiving terminal can be realized by just adding means for receiving program data and means for receiving control information to a conventional mobile phone with browsing function.
19) In the stream data receiving device according to the present invention, the program data is video and audio data, and the program-related information contains data for display. In this way, video and audio data are received as program data, and then display data can be obtained as program-related information.
20) In the stream data receiving device according to the present invention, the program data is audio data, and the program-related information is data for display. In this way, audio data is received as program data, and then display data can be obtained as program-related information.
21) In the method for obtaining program-related information according to the present invention comprises the steps of: receiving characteristic data of a transport stream in which basic data for determining a URI used for obtaining program-related information is mixed, in addition to program data containing video and/or audio data being broadcast as the transport stream; determining a URI used for obtaining program-related information in accordance with the basic data for determining a URI by reading out data for identifying terminal's attribution stored in a terminal; and obtaining the program-related information from a contents-server specified by the determined URI. In this way, no excessive functions are necessary to each terminal, so that each terminal can be smaller and lighter. Also, corresponding program-related information can be acquired even when browser language vary by carrier, by uploading the information in a language capable of being interpreted by the terminal. Further, since URI is determined at each terminal, a lower load is imposed on the contents-server than the case of determining a URI for obtaining program-related information within communications between the terminal and the contents-server.
22) In the broadcasting apparatus for program-related information according to the present invention comprises: A) a first storage means for storing program data; B) a second storage means for storing basic data for determining a URI by which each terminal acquires program-related information via the Internet; and C) broadcasting means for broadcasting program data containing video and/or audio data as a transport stream; D) wherein the broadcasting means broadcasts the basic data for determining a URI so as to mix the basic data into characteristic data of the transport stream data. In this way, no excessive functions are necessary to each terminal, so that each terminal can be smaller and lighter. Also, corresponding program-related information can be acquired even when browser language vary by carrier, by uploading the information in a language capable of being interpreted by the terminal. Further, since URI is determined at each terminal, a lower load is imposed on the contents-server than the case of determining a URI for obtaining program-related information within communications between the terminal and the contents-server.
23) In the broadcasting apparatus for program-related information according to the present invention comprises: broadcasting program data containing video and/or audio data as a transport stream; and broadcasting basic data for determining a URI so as to mixed the basic data into characteristic data of the transport stream data. In this way, no excessive functions are necessary to each terminal, so that each terminal can be smaller and lighter. Also, corresponding program-related information can be acquired even when browser language vary by carrier, by uploading the information in a language capable of being interpreted by the terminal. Further, since URI is determined at each terminal, a lower load is imposed on the contents-server than the case of determining a URI for obtaining program-related information within communications between the terminal and the contents-server.
26) The method for obtaining program-related information according to the present invention comprises the steps of: broadcasting program data containing video and/or audio data as a transport stream; at each terminal, delivering a program specifying identifier for the program and data for identifying terminal's attribution stored in the terminal to a URI determining server; receiving a URI for acquiring program-related information; and obtaining the program-related information from a contents-server specified from the received URI. In this way, no excessive functions are necessary to each terminal, so that each terminal can be smaller and lighter. Also, corresponding program-related information can be acquired even when browser language vary by carrier, by uploading the information in a language capable of being interpreted by the terminal. Further, since URI is determined at each terminal. Since, URI for the contents-server can be determined between a terminal and the URI determination server, it is not necessary to broadcast the basic data for determining a URI for the destination from which program-related information is acquired by using data such as characteristic data.
27) The method for obtaining program-related information according to the present invention comprises the steps of: broadcasting a corresponding table including program-related information existence data representing presence of data for identifying terminal's attribution and program-related information so as to mix the table into the transport stream, and at each table, determining capability of performing communication to the URI determining server in accordance with the corresponding table. In this way, communication with the URI determination server can be established only the case that program-related information exists.
28) The data regenerating apparatus according to the present invention comprising: receiving means for receiving data being broadcast; a first regenerating means for regenerating the received broadcast data; storage means for storing data for identifying terminal's attribution; URI determining means for determining a URI of data to be downloaded in accordance with basic data for determining URI by reading out basic data for determining URI contained in the data being broadcast and the data for identifying terminal's attribution stored in the storage means upon receipt of a command from a user; and a second regenerating means for regenerating data which is downloaded using the determined URI. In this way, data complying with the second regenerating means in the terminal can be downloaded and be regenerated at a terminal having different terminal's attribution by storing data into URIs that vary corresponding to terminal's attributions.

In the present invention, the term "receiving terminal" refers to a device for receiving data from the transmitter, including both devices having no display such as set-top-box and having a display such as television set. This also includes mobile phones, portable terminals, and PCs each capable of receiving broadcast data from the transmitter.

The term "data for identifying terminal's attribution" is data for identifying attribution of each terminal, this corresponds to carrier's Identifiers or browser language identifiers, but not limited to these, certain data formats capable of regeneratable, such as data for regeneration on terminals (such as audio data and video data) is included therein.

In the present invention, the term "a first regenerating means" refers to a broadcasting data receiving part 54, a display part 52, an audio output part 53, 54 in the above embodiments herein.

In the present invention, the term "a second regenerating means" refers to display processing performed by the CPU in the embodiments herein.

The term "characteristic data" refers to data describing characteristics related to packets consisting of stream data, PMT corresponds to such data in the embodiments herein.

In the present invention, the term "basic data for determining a URI" refers to basic data for determining a URI at terminals, corresponding to carrier-oriented URI tables in the embodiments herein.

In the present invention, the term "a communication path" refers to not only communications through a wire(s) but also includes wireless communications.

The term "acquire via a communication line(s) such as the Internet " includes acquiring information through communications not only on a one-to-one basis, but also includes broadcast on a one-to-multiple basis.

The term "structure-descriptive-type language description data " refers to data to which location for assigning document data to be displayed, size of a character string of the document data, and information on restricting display regarding graphic data to be referred, are added. Data written in BML is described in the embodiments herein, this includes data in HTML, XML-type data, and data defined by MHEG (Multimedia and Hypermedia information coding Expert Group) standard, for example.

The term "information on user's attribution" corresponds to user's attribution in embodiments herein.

The term "storage medium storing a program(s)" in this invention refers to a storage medium storing a computer-program(s) therein such as a ROM(s), a RAM(s), and a flexible disk(s), a CD-ROM(s), a memory card(s), a hard disk(s). The storage medium also forms a concept in which a phone line(s), a data carrying path (es) and so on are included therein. Also, the storage medium refers not only to a medium connected to the CPU and a computer-program stored there is capable of being executed directly by the CPU, such as hard disk(s)but also includes a storing medium such as CD-ROM storing a computer-program(s) which is executed after installation therein.

The term "computer-program(s)" in this invention refers not only to a computer-program(s) which is directly executed by the CPU but also includes a computer-program(s) being compressed, a computer-program(s) being encrypted and so on.

The term "storage medium storing data" in this invention refers to a storage medium storing data therein such as a ROM(s), a RAM(s), a flexible disk(s), a CD-ROM(s), a memory card(s), a hard disk(s) and the like.

The term "data" as used herein refers not only to data capable of being processed process with a CPU, but also includes decoded data, packetized data, data on a carrier wave(s) (i.e. carrier wave(s) modulated with the data).

While the embodiments of the present invention, as disclosed herein, constitute preferred forms, it is to be understood that each term was used as illustrative and not restrictive, and can be changed within the scope of the claims without departing from the scope and spirit of the invention.

## Claims

1. A method for obtaining program-related information, comprising the steps of:
broadcasting program data containing video and audio data as a transport stream, and broadcasting basic data for determining a URI used for acquiring program-related information so that the basic data is mixed into characteristic data of the transport stream data;
at each receiving terminal, determining the URI by reading out data for identifying terminal's attribution stored in the terminal, and
obtaining the program-related information from a contents-server specified by the determined URI.

2. The method for obtaining program-related information of claim 1, wherein the data for identifying terminal's attribution is a carrier's identifier stored in the terminal.

3. The method for obtaining program-related information of claim 1, wherein the data for identifying terminal's attribution is a browser language used in the terminal.

4. The method for obtaining program-related information according to one of claim 1 through claim 3, wherein the basic data for determining a URI is written within SI (service information) of the transport stream.

5. The method for obtaining program-related information of claim 4, wherein the basic data for determining a URI is written within an EIT (event information table) of the service information.

6. The method for obtaining program-related information according to one of claim 1 through claim 3, wherein the basic data for determining a URI is written within PSI (program specific information).

7. The method for obtaining program-related information according to one of claim 6, wherein the basic data for determining a URI is written in PMT (program map table).

8. The method for obtaining program-related information according to one of claim 1 through claim 3, wherein the basic data for determining a URI is written within a stream descriptor in an event message transmission method of the stream.

9. The method for obtaining program-related information of claim 1, wherein the basic data for determining a URI is a corresponding table comprised of a group of combined data of URIs and data for identifying terminal's attribution, and wherein a URI is determined by specifying combined data that conform with the identification data stored in the terminal.

10. The method for obtaining program-related information of claim 1, wherein the data for identifying terminal's attribution is a carrier's identifier, the basic data for determining a URI is remaining data after removing a part corresponding to the carrier's identifier out of URI data, and wherein the URI is determined by adding a carrier's identifier stored in the terminal.

11. The method for obtaining program-related information of claim 2, wherein the data for identifying terminal's attribution is a browser language identifier used in the terminal, the basic data for determining a URI is remaining data after removing a part corresponding to a browser language identifier out of URI data, and wherein the URI is determined by adding a browser language identifier stored in the terminal.

12. The method for obtaining program-related information according to claim 1, wherein
the basic data for determining a URI is a corresponding table comprising a group of combined data of a flag that represents capability of acquiring program-related information from a contents-server and data for identifying terminal's attribution, each terminal specifies combined data complying with data for identifying terminal's attribution stored in the terminal, then a series of steps is carried out when the flag representing program-related information from a contents-server can be acquired; transmitting a program identifier of a program to be received to a predetermined URI server; receiving a URI of the contents-server from which program-related information is acquired; and acquiring the program-related information from the contents server specified by the URI.

13. The method for obtaining program-related information of claim 1 through claim 12, wherein the receiving terminal initiates process for determining a URI by a command from a user.

14. The method for obtaining program-related information of claim 13, wherein the receiving terminal initiates process for determining a URI upon receipt of the command from user during received broadcast data is regenerated.

15. The method for obtaining program-related information of claim 14, wherein the receiving terminal updates the basic data for determining a URI whenever new basic data for determining a URI is received and initiates process for determining a URI upon receipt of a command from a user.

16. The method for obtaining program-related information of claim 15, wherein whenever new basic data for determining a URI is received, the receiving terminal reads out data conform with data for identifying terminal's attribution stored in the terminal out of the new basic data.

17. A stream data receiving device comprising:
receiving means for receiving 1) program data containing video and audio data being broadcast as a transport stream and 2) characteristic data of the transport stream data;
notification data generating means for generating notification data containing video and/or audio data in accordance with the characteristic data and the transport stream being received;
notification means for notifying the generated notification data;
storage means for storing data for identifying terminal's attribution;
URI determining means for determining a URI for acquiring program-related information in accordance with basic data for determining a URI by reading out the basic data in control information and the data for identifying terminal's attribution upon providing an acquisition command from an operator; and
program-related information acquiring means for acquiring program-related information from a contents-server specified by the determined URI and providing the obtained information to the notification data generating means.

18. The stream data receiving of claim 17, wherein the receiving device is a mobile phone with browsing function, and wherein the program-related information obtaining means accesses to the contents-server via a server located at a communication center.

19. The stream data receiving device of claim 18, wherein the program data is video and audio data, and wherein the program-related information contains data for display.

20. The stream data receiving device according to claim 18, wherein the program data is audio data; and wherein the program-related information is data for display.

21. A method for obtaining program-related information comprising the steps of:
receiving characteristic data of a transport stream in which basic data for determining a URI used for obtaining program-related information is mixed, in addition to program data containing video and/or audio data being broadcast as the transport stream;
determining a URI used for obtaining program-related information in accordance with the basic data for determining a URI by reading out data for identifying terminal's attribution stored in a terminal; and
obtaining the program-related information from a contents-server specified by the determined URI.

22. A broadcasting apparatus for program-related information comprising:
a first storage means for storing program data;
a second storage means for storing basic data for determining a URI by which each terminal acquires program-related information via the Internet; and
broadcasting means for broadcasting program data containing video and/or audio data as a transport stream;
wherein the broadcasting means broadcasts the basic data for determining a URI so as to mix the basic data into characteristic data of the transport stream data

23. A method for broadcasting program-related information comprising the steps of:
broadcasting program data containing video and/or audio data as a transport stream; and
broadcasting basic data for determining a URI so as to mixed the basic data into characteristic data of the transport stream data.

24. One of a computer-program and a computer readable storage medium storing the program, by which a broadcasting data receiving terminal is operated as a program-related information obtaining device, the receiving terminal comprising:
1) broadcasting data receiving part for receiving characteristic data of stream data containing video stream data and audio stream data;
2) notifying means for notifying the stream data to a user of the terminal; and
3) a connecting part for connecting the terminal with a central computer connected to a network;
wherein the program executes the steps of:
reading out data for identifying terminal's attribution stored in the terminal; and
determining a URI for acquiring program-related information in accordance with the basic data used for obtaining program-related information via a network in the characteristic data.

25. A computer readable storage medium which stores basic data for determining a URI, wherein the basic data is a corresponding table comprises data for identifying terminal's attribution and a URI for acquiring program-related information.

26. A method for obtaining program-related information comprising the steps of:
broadcasting program data containing video and/or audio data as a transport stream;
at each terminal, delivering a program specifying identifier for the program and data for identifying terminal's attribution stored in the terminal to a URI determining server;
receiving a URI for acquiring program-related information; and
obtaining the program-related information from a contents-server specified from the received URI.

27. The method of claim 26, further comprising;
broadcasting a corresponding table including program-related information existence data representing presence of data for identifying terminal's attribution and program-related information so as to mix the table into the transport stream, and
at each table, determining capability of performing communication to the URI determining server in accordance with the corresponding table.

28. A data regenerating apparatus comprising:
receiving means for receiving data being broadcast;
a first regenerating means for regenerating the received broadcast data;
storage means for storing data for identifying terminal's attribution;
URI determining means for determining a URI of data to be downloaded in accordance with basic data for determining URI by reading out basic data for determining URI contained in the data being broadcast and the data for identifying terminal's attribution stored in the storage means upon receipt of a command from a user; and
a second regenerating means for regenerating data, which is downloaded using the determined URI.
